Europäisches Patentamt

European Patent Office

Office européen des brevets

(11) Veröffentlichungsnummer: **0 338 203**
**A1**

(12) ## EUROPÄISCHE PATENTANMELDUNG

(21) Anmeldenummer: 89102582.7

(22) Anmeldetag: 15.02.89

(51) Int. Cl.⁴: **B65G 65/44**

(30) Priorität: 19.04.88 DE 3813109

(43) Veröffentlichungstag der Anmeldung:
25.10.89 Patentblatt 89/43

(84) Benannte Vertragsstaaten:
AT BE CH DE ES FR GB GR IT LI LU NL SE

(71) Anmelder: GERICKE GMBH
Max-Eyth-Strasse 1
D-7703 Rielasingen(DE)

(72) Erfinder: Wagner, Alexander
Oberdorfstrasse
D-7700 Singen(DE)

(74) Vertreter: Zeitler, Giselher, Dipl.-Ing.
Patentanwalt Herrnstrasse 15 Postfach 26 02 51
D-8000 München 26(DE)

(54) Verfahren und Vorrichtung zum dosierten Austrag von Glasfasern und dgl. schwerfliessfähigen Feststoffen. ·

(57) Bei einem Verfahren sowie einer Vorrichtung zum dosierten Austrag von Glasfasern u. dgl. schwerfließfähigen Feststoffen, bei dem das Dosiergut an einer Aufgabestelle auf eine im wesentlichen ebene Fläche aufgegeben und auf dieser durch eine fortwährende vorwärtsschwingende Bewegung in dauernder Bewegung gehalten und zu einer Auslaufstelle gefördert wird, wird derart vorgegangen, daß das auf die Fläche aufgegebene Dosiergut 9 in eine um die Aufgabestelle verlaufende Kreis- bzw. Spiralbewegung versetzt wird und daß von dem derart bewegten Dosiergut 9 entlang einer gekrümmten Linie, die sich von der äußeren Begrenzung 11 des Dosiergutes 9 an der Aufgabestelle bis zu der Auslaufstelle 10 erstreckt, kontinuierlich ein dosierter Teilstrom abgezogen wird. Das zur Durchführung dieses Verfahrens vorgesehene Dosiergerät ist versehen mit einem durch einen Schwingantrieb 6, 7 in Schwingungen versetzbaren Schwingförderer 1, der einen im wesentlichen ebenen Boden zur Aufnahme des Dosiergutes 9 mit einer Aufgabestelle und einem Auslauf 8 aufweist. Hierbei ist der Schwingförderer 1 als etwa zylinderförmiger Schwingtopf 2 ausgebildet, der an seinem Rand 4 mit einer tangentialen Auslaufrinne 8 versehen ist.

Fig. 1

## Verfahren und Vorrichtung zum dosierten Austrag von Glasfasern und dgl. schwerfließfähigen Feststoffen

Die Erfindung betrifft ein Verfahren zum dosierten Austrag von Glasfasern und dgl. schwerfließfähigen Feststoffen gemäß dem Oberbegriff des Anspruchs 1 sowie eine zur Durchführung dieses Verfahrens vorgesehene Vorrichtung gemäß dem Oberbegriff des Anspruchs 6.

Glasfaserabschnitte und ähnliche Materialien stellen schwerfließfähige Feststoffe dar, die in außerordentlich großem Ausmaß zur Brückenbildung neigen und daher bisher nur mit Schwierigkeiten, wenn nicht sogar überhaupt nicht zufriedenstellend dosiert werden konnten.

So stellt speziell die Dosierung von Glasfasern an Dosiergeräte besondere Anforderungen. Zum einen dürfen keine Aufspleißungen der gebündelten Glasfasern erfolgen. Deshalb wurde in der Vergangenheit meist mit Schwingrinnen gearbeitet. Zum anderen verhindert auch die fasrige Struktur des Dosiergutes das Nachfließen aus Behältern in der geforderten Kontinuität. Es kommt leicht zu Brückenbildungen, so daß die Fasern unregelmäßig aus den Trichtern ausfließen und damit der Produktstrom unterbrochen wird. Das nachfolgende Dosierorgan kann diese Unregelmäßigkeiten nicht mehr ausgleichen. Eine befriedigende Dosierung ist nicht mehr möglich.

Es sind zwar schon Verfahren sowie Vorrichtungen zum dosierten Austrag von Glasfasern und dgl. schwerfließfähigen Feststoffen bekannt. Jedoch gewährleisten diese insgesamt noch keine sichere Funktion und sind insbesondere nicht in der Lage, die betreffenden schwerfließfähigen Feststoffe über einen weiten Leistungsbereich, im speziellen auch mit nur geringer Dosiermenge und hoher Dosiergenauigkeit, dosieren zu können.

So ist beispielsweise eine mehrstufige volumetrische Dosiervorrichtung bekannt (DE-OS 31 43 981), bei der das Dosiergut aus einem Aufnahmetrichter nach unten ausgetragen und durch mehrere Stufen zur Druckentlastung, Belüftung sowie Auflockerung des Materials geleitet wird. Hierbei wird das Dosiergut in einen Zustand von konstanter Dichte versetzt. Das derart konditionierte Material wird dann volumetrisch durch eine Aufteilungsstufe einer Dosierstufe zugeführt. Abgesehen davon, daß eine derartige bekannte Dosiervorrichtung einen großen konstruktiven Aufwand beinhaltet, ist hiermit noch immer nicht eine stets funktionssichere Dosierleistung über einen großen Variationsbereich gewährleistet.

Es ist auch schon versucht worden, zum Dosieren von Glasfasern oder anderen schwerfließfähigen Feststoffen bekannte Schwingförderrinnen (DE-OS 1 454 860) zu verwenden, die eine langgestreckte, mittels eines Schwingantriebes in Schwingungen versetzbare Förderrinne aufweisen. Hierbei tritt jedoch ebenfalls stets der nachteilige Effekt einer Brückenbildung auf. Diese Brückenbildung ergibt sich bei der Schwingförderrinne am Austrittsspalt des Dosiergutes, d.h. an derjenigen Stelle, an der das Dosiergut aus dem üblichen trichterförmigen Vorratsbehälter auf die Förderrinne austritt. Auch kann mit einer derartigen Schwingförderrinne keine kleine Dosierleistung, wie dies in vielen Fällen erwünscht ist, erzielt werden. Um dies zu erreichen, müßte nämliche die Zufuhr des Dosiergutes zur Schwingförderrinne entsprechend verkleinert werden. Dies ist jedoch deswegen nicht möglich, weil der Austrittsspalt wegen der erwähnten Gefahr der Brückenbildung nicht beliebig verkleinert werden kann. Es benötigt daher die bekannte Schwingförderrinne einen relativ großen Austrittsspalt zwischen Vorratsbehälter und Förderrinne, wobei sich trotzdem häufig eine Brückenbildung des Dosiergutes an dieser Übergangsstelle ergibt.

Als ähnlich nachteilig und funktionsunzuverlässig erweisen sich auch bekannte Schneckenförderer, und zwar vor allen Dingen deswegen, weil deren Förderquerschnitt, um erwünscht kleinere Dosierleistungen zu erreichen, entsprechend verkleinert werden müßte. Dies ist jedoch jenseits einer bestimmten, konstruktiv bedingten Grenze nicht mehr möglich, da beispielsweise bei einer Länge der Glasfaserabschnitte von 6 oder 8 mm der Querschnitt des Schneckenförderers eine durch diese Länge der Glasfaserabschnitte bestimmte Größe nicht unterschreiten darf. Außerdem besteht die Gefahr, daß die Glasfasern mechanisch zerstört werden.

Der Erfindung liegt daher die Aufgabe zugrunde, zur Beseitigung der geschilderten Nachteile ein Verfahren sowie eine Vorrichtung zu schaffen, mittels denen Glasfasern und dgl. schwerfließfähige Feststoffe mit geringem konstruktivem Aufwand einwandfrei kontinuierlich über einen weiten Leistungsbereich dosiert werden können, ohne daß die Gefahr von Brückenbildung oder sogar Blockierung besteht.

Diese Aufgabe wird bei dem Verfahren gemäß der Erfindung durch die Merkmale des Anspruchs 1 gelöst. Vorteilhafte Weiterbildungen hiervon sind in den Ansprüchen 2 - 5 angegeben.

Die zur Durchführung dieses Verfahrens geschaffene Vorrichtung gemäß der Erfindung ist durch die Merkmale des An spruchs 6 beschrieben. Vorteilhafte Ausgestaltungen hiervon sind in den weiteren Ansprüchen enthalten.

Dem Verfahren sowie der Vorrichtung gemäß der Erfindung liegt der wesentliche Gedanke zugrunde, das Dosiergut in eine um seine Aufgabestelle verlaufende Kreis- bzw. Spiralbewegung zu versetzen und von dem derart bewegten Dosiergut kontinuierlich einen dosierten Teilstrom entlang einer gekrümmten Linie abzuziehen. Diese erstreckt sich von der äußeren Begrenzung des Dosiergutes an der Aufgabestelle bis zu der Auslaufstelle. Diese gekrümmte Linie, entlang welcher der dosierte Teilstrom aus dem Dosiergerät abgezogen wird, kann im einfachsten Fall weitgehend tangential zur Begrenzung des Dosiergutes an der Aufgabestelle oder zuerst radial und dann tangential verlaufen. Es kann sich diese gekrümmte Abzugslinie in weiterer Ausgestaltung der Erfindung jedoch auch in Form einer Teilkreislinie bzw. Spirallinie von der äußeren Begrenzung des Dosiergutes bis zur Auslaufstelle erstrecken. Auch ist es möglich, die gekrümmte Abzugslinie wendelförmig verlaufen zu lassen.

Bei einer derartigen Ausgestaltung der Erfindung ergibt sich darüber hinaus der weitere wesentliche Vorteil, daß ein breites Spektrum von Möglichkeiten zum gesteuerten Dosieren des Teilstromes zur Verfügung steht, da zu diesem Zweck entweder die Breite des abgezogenen Teilstromes und/oder die Amplitude bzw. Frequenz der Schwingungsbewegung des Dosiergutes und/oder die Aufgabemenge des Dosiergutes entsprechend verändert werden kann.

Das zur Durchführung dieses Verfahrens vorgesehene Dosiergerät gemäß der Erfindung weist einen Schwingförderer auf, der einen etwa zylinderförmig ausgebildeten Schwingtopf besitzt. Dieser Schwingtopf ist an seinem Rand mit einer tangentialen Auslaufrinne versehen und nimmt auf seinem Boden das Dosiergut auf.

Der Boden des Schwingtopfes kann flach bzw. eben ausgeführt sein. In Ausgestaltung der Erfindung ist es jedoch auch möglich, den Boden des Schwingtopfes bombiert, d.h. nach oben gewölbt auszubilden. Hierdurch ergibt sich der Vorteil, daß das im Schwingtopf enthaltene Dosiergut jeweils vollständig ausgetragen wird.

Es liegt im Rahmen der Erfindung, die Auslaufrinne des Schwingtopfes in ihrer Breite verstellbar auszubilden, um den hieraus ausgetragenen Teilstrom gesteuert dosieren zu können. Stattdessen ist es selbstverständlich auch möglich, eine auswechselbare Auslaufrinne vorzusehen oder sogar -für erwünschte andere Leistungsbereiche - den Schwingtopf auszuwechseln.

Die Gestalt der Auslaufrinne kann gleichfalls verschiedenartig gehalten sein. In diesem Zusammenhang ist es erfindungsgemäß auch möglich, die Auslaufrinne, beginnend vom Topfboden, wendelförmig entlang der Wand des Schwingtopfes ansteigen zu lassen. Hierdurch ergibt sich u.a. der Vorteil, innerhalb des Schwingtopfes einen größeren Vorrat des betreffenden Dosiergutes zur Verfügung zu haben.

In weiterer Ausgestaltung der Erfindung ist vorgesehen, oberhalb des Schwingtopfes einen trichterförmigen Vorratsbehälter für das Dosiergut anzuordnen, dessen unteres offenes Austragsende an der Aufgabestelle einen bestimmten Abstand zum Boden des Schwingtopfes aufweist. Wenn dann dieser Vorratsbehälter darüber hinaus höhenverstellbar gegenüber dem Schwingtopf angeordnet ist, läßt sich hierdurch in einfacher Weise die jeweils auf den Schwingtopf zulaufende Menge des Dosiergutes steuern. Hierdurch kann dann in der erwünschten Weise das im Schwingtopf befindliche, aus dem Dosiergut gebildete Schwingbett und somit auch die Dosierleistung verändert werden.

Wenn schließlich das untere Austragsende des Vorratsbehälters nach außen gebogen ist, ist hierdurch zusätzlich eine Brückenbildung des Dosiergutes an dieser Stelle vermieden.

Insgesamt ist es damit durch die Erfindung möglich, eine genaue Dosierung von schlechtfließenden bzw. schwerfließfähigen, brückenbildenden, empfindlichen, flockigen, sperrigen Feststoffen, insbesondere Glasfasern, zu erreichen, wobei gleichzeitig außerordentlich kleine Dosierleistungen erzielt werden können. So kann durch das erfindungsgemäße Dosiergerät, wenn beispielsweise Glasfasern mit einer Länge von 6 mm dosiert werden sollen, ein Leistungsbereich von 0,3 - 60 kg/h überstrichen werden. Hierbei wurden beispielsweise bei einer tatsächlich gebauten Ausführungsform Dosierleistungen für Glasfasern gemessen, die bei einem Schwingtopf mit einer Auslaufrinne von 18 mm Breite 0,3 -25 kg/h und bei einem Schwingtopf mit einer Auslaufrinne von 35 mm Breite 1,2 - 60 kg/h betrugen.

Wesentlich ist bei der Erfindung, daß durch die im Schwingtopf herrschende dauernde Kreis- bzw. Spiralbewegung sich das schlechtfließende Dosiergut immer in Bewegung befindet. Dadurch, daß von diesem Dosiergut immer nur ein Teilstrom abgenommen wird, bildet sich ein kontinuierliches Schwingbett aus, wobei sich die einzelnen Materialteilchen von sämtlichen oder nahezu allen äußeren Randstellen des aufgegebenen Dosiergutes frei nach außen bewegen und dann letztlich entlang der gekrümmten Linie in Form des dosierten Teilstromes aus der Auslaufrinne ausgetragen werden.

Aufgrund der Konstanz des Niveaus des im Schwingtopf vorhandenen Schwingbettes sowie aufgrund der vorzugsweise eine nur kurze Länge aufweisenden Auslaufrinne ist außerdem gewährleistet, daß Änderungen der Dosierleistung unmittelbar und schnell erfolgen können. Es kann daher das erfindungsgemäße Dosiergerät mit großer Vibration für alle Leistungsbereiche gefahren werden.

Wenn sichergestellt wird, daß der Austrittsquerschnitt des oberhalb des Schwingtopfes angeordneten Vorratsbehälters ausreichend groß ist, ist auch bei kleinen Dosierleistungen infolge der Abstützung der Dosiergutsäule auf dem Schwingtopf bzw. auf dem Schwingbett ein einwandfreier Austrag aus dem Vorratsbehälter gewährleistet, weil sich die Schwingungen des Schwingbettes nach oben in die abgestützte Dosiergutsäule fortpflanzen und diese somit stets in fließfähigem Zustand halten. Dadurch wird einer Brückenbildung bei schwerfließfähigen Feststoffen wirkungsvoll entgegengewirkt.

Insgesamt läßt sich daher feststellen, daß das erfindungsgemäße Dosiergerät, das zum dosierten Austrag schlechtfließender und fasriger Feststoffe dient, die beschriebenen Nachteile und Schwächen des Standes der Technik nicht mehr aufweist. So können z.B. Glasfasern von 1 - 8 mm Länge bei einer Leistung von 0,5 kg/h mit einer Dosiergenauigkeit von 1 - 3 % sehr gut dosiert werden. Wie schon dargelegt, beschreibt bei dem erfindungsgemäßen Dosiergerät der Schwingaufgeber bzw. der Schwingtopf eine Kreis- bzw. Spiralbewegung. Am äußeren Rand des Schwingtopfes ist ein tangentialer Rinnenfortsatz angebracht, durch den das Dosiergut den Schwingtopf verläßt. Aufgrund der im Schwingtopf herrschenden dauernden Kreis- bzw. Spiralbewegung ist das schlechtfließende Dosiergut immer in Bewegung. Da stets nur ein Teilstrom von dem in Bewegung befindlichen Dosiergut abgenommen wird, bildet sich ein Dosiergutniveau, und zwar entsprechend der eingestellten Auslaufhöhe des Zulauftrichters. Somit ergibt sich ein Schwingbett. Aufgrund des konstanten Niveaus und des kurzen Rinnenfortsatzes können Leistungsveränderungen unmittelbar und schnell vorgenommen werden.

Es ist auch möglich, das erfindungsgemäße Dosiergerät mit verschieden großen Schwingtöpfen für alle Leistungsbereiche zu fahren. Aufgrund eines extrem großen Zulauftrichteraustrittes, bezogen auf die Dosierleistung, wird die Vibration von dem im Schwingtopf befindlichen Dosiergut auf das im Zulauftrichter befindliche Dosiergut übertragen, so daß eine einwandfreie Austragung möglich ist. Für verschiedene Produkte und Dosierleistungsbereiche können die verschiedenen Dosiertöpfe gewechselt werden. Der Regelbereich bei einem Dosiertopf bzw. einer Schwingbetthöhe beträgt 1:15. Durch Veränderungen des Schwingbettes lassen sich Bereiche von 1:80 fahren. Als Antrieb kann ein Magnetantrieb dienen. Das Dosiergerät kann sowohl volumetrisch als auch in Kombination mit einer Differential-Dosierwaage eingesetzt werden.

Die Erfindung wird im folgenden anhand der Zeichnung näher erläutert. Dies zeigt in:

Fig. 1 schematisch in Seitenansicht das zur Durchführung des Verfahrens gemäß der Erfindung vorgesehene Dosiergerät;

Fig. 2 den Schwingtopf in Draufsicht und

Fig. 3 eine abgewandelte Ausführungsform des Schwingtopfes im Querschnitt.

Wie aus der Zeichnung ersichtlich, weist das dargestellte Dosiergerät 1 einen Schwingtopf 2 auf, der weitgehend zylinderförmig mit Boden 3, umlaufender Wand 4 sowie offener Oberseite ausgebildet ist. Der Schwingtopf 2 ist, vorzugsweise lösbar bzw. austauschbar, einem Halteelement 5 aufgesetzt, das eine Aufnahmekonstruktion für den Schwingtopf 2 bildet und über Federpakete 6 mit einer entsprechenden Gegenmasse 7 verbunden ist. Diese Gegenmasse 7, die durch einen Magnetantrieb oder einen Unwuchtmotor in entsprechende Vibrationen versetzt werden kann, bildet zusammen mit den Federpaketen 6 einen Schwingantrieb für den Schwingtopf 2, um diesen nach Art eines Schwingförderers in kontinuierlich vorwärtsschwingende Kreis- bzw. Spiralbewegungen zu versetzen.

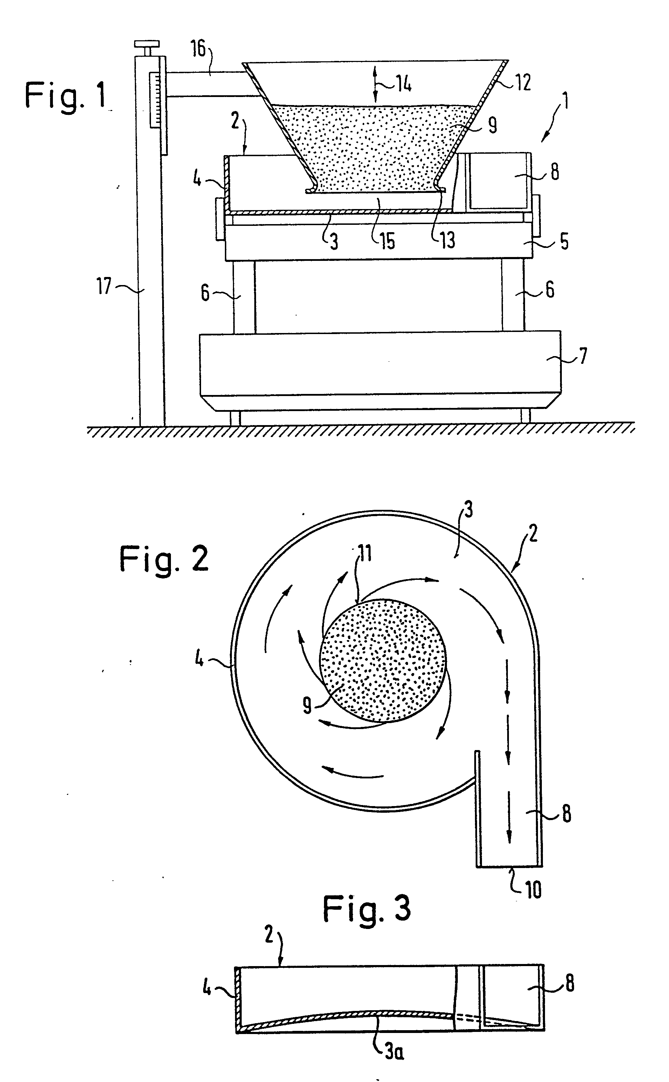

Wie deutlich aus Fig. 2 ersichtlich, ist der Schwingtopf 2 an einer bestimmten Stelle seiner Wand 4 mit einer Auslaufrinne 8 versehen, die tangential zu dem durch die kreisförmige Wand 4 des Schwingtopfes 2 gebildeten Umfang verläuft und somit einen dosierten Abzug des aufgegebenen, aufgrund des Schwingantriebes 6, 7 in Kreisbewegung versetzten Dosiergutes 9 in Form eines Teilstromes ermöglicht. Obwohl in der Zeichnung nicht näher dargestellt, ist die Auslaufrinne 8 in ihrer Breite verstellbar ausgebildet, um hierdurch zu ermöglichen, durch einfache Verstellung des Querschnittes bzw. der Breite der Auslaufrinne 8 an deren Auslaufstelle 10 verschiedene Dosierleistungen zu erzielen. Wie aus Fig. 2 angedeutet ersichtlich, bewegt sich hierbei der dosierte Teilstrom des Dosiergutes 9 entlang einer gekrümmten, vorzugsweise teilkreisförmigen bzw. spiralförmigen Linie von der äußeren Begrenzung 11 des aufgegebenen Dosiergutes 9 bis zur Auslaufstelle 10. Hierbei bewegt sich das im Schwingtopf 2 befindliche Dosiergut 9 insgesamt in Form einer Kreisbewegung bzw. Spiralbewegung standig nach außen in Richtung der Wand 4 des Schwingtopfes 2, wobei lediglich die radial am weitesten außen gelegene Materialmenge des Dosiergutes 9 in Form des dosierten Teilstromes aus der Auslaufrinne 8 ausgetragen wird.

Bei der abgewandelten Ausführungsform gemäß Fig. 3 weist der Schwingtopf 2 anstelle eines ebenen Bodens 3 einen nach oben gewölbten Boden 3a auf. Dadurch ist ein vollständiges Auslaufen des Dosiergutes 9 aus dem Schwingtopf 2 gewährleistet.

Wie aus Fig. 1 ersichtlich, ist dem Schwingtopf 2 oberseitig ein trichterförmiger Vorratsbehälter 12 für das Dosiergut 9 zugeordnet, der mit seinem unteren offenen Aus tragsende 13 im Abstand zum Boden 3 des Schwingtopfes 2 angeordnet ist.

Wie durch den Doppelpfeil 14 angedeutet, ist der Vorratsbehälter 12 höhenverstellbar vorgesehen. Dadurch kann der zwischen dem unteren Austragsende 13 und dem Boden 3 des Schwingtopfes 2 gebildete Zulaufspalt 15 - und damit auch die jeweilige Dosiergut-Zulaufmenge - verändert werden. Die Höhenverstellbarkeit des Vorratsbehälters 12 wird bei dem dargestellten Ausführungsbeispiel in einfacher Weise dadurch erreicht, daß dieser mittels eines Haltebügels 16 an einer Stütze 17 höhenverstellbar, beispielsweise mittels eines Schraubtriebes oder dgl., festgelegt ist.

Wie schließlich noch aus Fig. 1 ersichtlich, ist das untere Austragsende 13 des Vorratsbehälters 12 nach außen gebogen, um durch diese zusätzliche Maßnahme mit Sicherheit eine Brückenbildung des Dosiergutes 9 im Zulaufspalt 15 zu verhindern.

## Ansprüche

1. Verfahren zum dosierten Austrag von Glasfasern und dgl. schwerfließfähigen Feststoffen, bei dem das Dosiergut an einer Aufgabestelle auf eine im wesentlichen ebene Fläche aufgegeben und auf dieser durch eine fortwährende vorwärtsschwingende Bewegung in dauernder Bewegung gehalten und zu einer Auslaufstelle gefördert wird,
**dadurch gekennzeichnet,**
daß das auf die Fläche aufgegebene Dosiergut in eine um die Aufgabestelle verlaufende Kreis- bzw. Spiralbewegung versetzt wird und daß von dem derart bewegten Dosiergut entlang einer gekrümmten Linie, die sich von der äußeren Begrenzung des Dosiergutes an der Aufgabestelle bis zu der Auslaufstelle erstreckt, kontinuierlich ein dosierter Teilstrom abgezogen wird.

2. Verfahren nach Anspruch 1,
**dadurch gekennzeichnet,**
daß die gekrümmte Abzugslinie weitgehend tangential bzw. kombiniert radial/tangential zur Begrenzung des Dosiergutes an der Aufgabestelle verläuft.

3. Verfahren nach Anspruch 1 oder 2, **dadurch gekennzeichnet,**
daß sich die gekrümmte Abzugslinie in Form einer Teilkreislinie bzw. Spirallinie von der äußeren Begrenzung des Dosiergutes an der Aufgabestelle bis zur Auslaufstelle erstreckt.

4. Verfahren nach einem der Ansprüche 1 bis 3, **dadurch gekennzeichnet,**
daß die gekrümmte Abzugslinie wendelförmig verläuft.

5. Verfahren nach einem der Ansprüche 1 bis 4,
**dadurch gekennzeichnet,**
daß zum gesteuerten Dosieren die Breite des abgezogenen Teilstromes und/oder die Amplitude bzw. Frequenz der Schwingbewegung des Dosiergutes und/oder die Aufgabemenge des Dosiergutes verändert wird.

6. Dosiergerät zur Durchführung des Verfahrens nach einem der Ansprüche 1 bis 5, mit einem durch einen Schwingantrieb in Schwingungen versetzbaren Schwingförderer, der einen im wesentlichen ebenen Boden zur Aufnahme des Dosiergutes mit einer Aufgabestelle und einem Auslauf aufweist,
**dadurch gekennzeichnet,**
daß der Schwingförderer (1) als etwa zylinderförmiger Schwingtopf (2) ausgebildet ist, der an seinem Rand (4) mit einer tangentialen Auslaufrinne (8) versehen ist.

7. Dosiergerät nach Anspruch 6,
**dadurch gekennzeichnet,**
daß der Boden (3a) des Schwingtopfes (2) nach oben gewölbt ausgebildet ist.

8. Dosiergerät nach Anspruch 6 oder 7,
**dadurch gekennzeichnet,**
daß die Auslaufrinne (8) in ihrer Breite verstellbar ist.

9. Dosiergerät nach einem der Ansprüche 6 bis 8,
**dadurch gekennzeichnet,** .
daß die Auslaufrinne (8), beginnend am Topfboden (3), wendelförmig entlang der Wand (4) des Schwingtopfes (2) ansteigt.

10. Dosiergerät nach einem der Ansprüche 6 bis 9,
**dadurch gekennzeichnet,**
daß oberhalb des Schwingtopfes (2) ein trichterförmiger Vorratsbehälter (12) für das Dosiergut (9) vorgesehen ist, dessen unteres offenes Austragsende (13) an der Aufgabestelle im Abstand zum Boden (3) des Schwingtopfes (2) angeordnet ist.

11. Dosiergerät nach Anspruch 10,
**dadurch gekennzeichnet,**
daß der Vorratsbehälter (12) gegenüber dem Schwingtopf (2) höhenverstellbar ist.

12. Dosiergerät nach Anspruch 10 oder 11,
**dadurch gekennzeichnet,**
daß der Vorratsbehälter (12) an seinem unteren Austragsende (13) einen nach außen gebogenen Rand aufweist.

Fig. 1

Fig. 2

Fig. 3

**Europäisches Patentamt**

# EUROPÄISCHER RECHERCHENBERICHT

| | EINSCHLÄGIGE DOKUMENTE | | EP 89102582.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - B - 1 279 537 (CARRIER MANUFACTURING COMPANY) * Gesamt * | 1-4 | B 65 G 65/44 |
| A | | 6,8 | |
| A | EP - A1 - 0 083 227 (KABUSHIKI KAISHA ISHIDA KOKI) * Fig. 1,1a,4,5; Seiten 5,6, 10,11 * ---- | 1,6,7 | |

| | | | RECHERCHIERTE SACHGEBIETE (Int. Cl.4) |
|---|---|---|---|
| | | | B 65 G |

Der vorliegende Recherchenbericht wurde für alle Patentansprüche erstellt.

| Recherchenort | Abschlußdatum der Recherche | Prüfer |
|---|---|---|
| WIEN | 28-07-1989 | PISSENBERGER |